# EUROPÄISCHE PATENTSCHRIFT

(11) **EP 3 628 706 B1**
(45) Veröffentlichungstag und Bekanntmachung des Hinweises auf die Patenterteilung: **22.06.2022**
(21) Anmeldenummer: 18196802.5
(22) Anmeldetag: 26.09.2018
(51) Int. Cl.: C09D 5/00

(54) **REAKTIONSHARZVERSIEGELUNG FÜR MULTIFUNKTIONALE MARKIERUNGEN**
REACTION RESIN SEALING FOR MULTI-FUNCTION MARKINGS
SCELLEMENT DE RÉSINE DE RÉACTION POUR MARQUAGES MULTIFONCTION

(43) Veröffentlichungstag der Anmeldung: 01.04.2020
(73) Patentinhaber: Röhm GmbH, 64295 Darmstadt (DE)
(72) Erfinder: KLEIN, Alexander, 55435 Gau-Algesheim (DE); LOTZ, Janos, 63571 Gelnhausen (DE); STICKELMAIER, Georg, 63828 Kleinkahl (DE)
(74) Vertreter: Röhm Patent Association

(56) Entgegenhaltungen:
- EP-A1- 3 358 082
- WO-A1-2018/183195
- US-A1- 2014 061 504

## Beschreibung

### Gebiet der Erfindung

Die vorliegende Erfindung betrifft eine Reaktionsharzversiegelung für mehrschichtige Markierungen oder Beschichtungen von Bodenflächen bzw. Fahrbahnen, wie beispielsweise Straßen, auf Kaltplastikbasis. Diese Versiegelung führt gegenüber etablierten Systemen des Standes der Technik zu einer effizienteren Ausstattung von Markierungen mit zusätzlichen Eigenschaften, insbesondere mit lumineszierenden, Strahlung-reflektierenden oder magnetischen Eigenschaften zur Unterstützung von Fahrerassistenzsystemen oder Systemen zur autonomen Steuerung von Fahrzeugen.

### Stand der Technik

Als Fahrbahnmarkierungsmaterialien werden zurzeit Systeme wie Lösungsmittel basierte Farben, Wasserfarben, thermoplastische Markierungsmassen, Markierungsmassen auf Basis von Reaktionsharzen sowie vorgefertigte Klebebänder eingesetzt. Letztere haben den Nachteil, dass sie aufwendig herzustellen und zu applizieren sind. Auch gibt es in im Hinblick auf eine anzustrebende Langlebigkeit der Markierung nur eingeschränkte Freiheitsgrade bezüglich der Ausgestaltung der Markierung, z.B. mit Glasperlen. Darüber hinaus neigen alle diese Systeme, d. h. Markierungen auf Lösemittel- oder Wasserbasis, sowie thermoplastische Systeme oder Reaktionsharz-gebundene Mehrkomponentensysteme, die beispielsweise als Kaltplastik applizierbar sind, dazu, in einer heißen, staubigen Umgebung in einem hohen Maße Partikel an der Oberfläche aufzunehmen. Diese Verschmutzung ist zum einen oft irreversibel, d. h. wird auch durch Wasser bzw. Regen nicht wieder entfernt und führt außerdem dazu, dass die Markierungen als solche nur noch schlecht oder gar nicht mehr zu erkennen sind.

Lösungsmittel- und wasserbasierende Systeme, sowie Thermoplastiksysteme, sind deutlich weniger verschleißfest und damit weniger dauerhaft als Kaltplastiksysteme. Kaltplastiksysteme verschleißen auch bei hohen Umgebungstemperaturen auf vielbefahrene Straßen mit hoher Verkehrsbeanspruchung der Markierung durch häufige Radüberrollung nur in vergleichbar sehr geringem Ausmaß. Allerdings verschmutzen dabei die hochwertigen Kaltplastiksysteme des Standes der Technik ähnlich schnell wie z.B. Thermoplastiksysteme bei anhaltend trockenem und heißen Klima durch Bitumenverschleppung und hieran anhaftenden Schmutz.

Ein etabliertes System zur Markierung von Straßen bzw. zur Bodenbeschichtung sind so genannte Reaktionsharze. Dabei handelt es sich in der Regel um 2-K-Systeme, die Monomere, Polymere und weitere Komponenten wie z.B. Füllstoffe, Hilfsstoffe oder Glasperlen aufweisen. In der einen Komponente der 2-K-Systeme ist dabei eine Initiatorkomponente enthalten und in der zweiten Komponente ein Beschleuniger. Vor der Applikation werden diese beiden Komponenten miteinander vermischt und innerhalb einer Topfzeit auf der Straße bzw. dem Fußboden appliziert. Die Langlebigkeit dieser Markierungen hängt dabei jedoch von ihrer Elastizität ab. So liegt für die Anwendung in besonders heißen Gebieten, aber auch in trockenen warmen Perioden gemäßigter Klimazonen hier ein Dilemma vor. Die Markierungen nach Stand der Technik werden bei Temperaturen oberhalb von 40 °C deutlich weicher und auch geringfügig klebriger. Solche Oberflächentemperaturen treten bei Sonneneinstrahlung auf schwarzen Asphaltdecken auch in gemäßigten Klimazonen im Sommer auf. Dies führt zu einer deutlich leichteren Verschmutzung durch Anhaftung von herumfliegenden Staubpartikeln oder Sandkörnern. Wenn man die Reaktionsharze dagegen härter einstellt, kann man diesem Effekt zwar entgegensteuern, dafür steigt jedoch auch die Abriebneigung der Markierung. Damit sinkt wiederum die Lebensdauer derselben.

Versiegelungen von Straßenmarkierungen sind nicht üblich, da ein mehrschichtiger Auftrag relativ aufwendig ist und eine zusätzliche Lagerhaltung bedingt. Dennoch sind für die Lösung einiger technischer Probleme auch mehrschichtige Straßenmarkierungen im Stand der Technik beschrieben worden.

Die meisten mehrschichtigen Systeme des Standes der Technik betreffen jedoch Markierungen, mit denen besondere optische Effekte realisiert werden sollen. So wird in WO 2010/019930 eine zusätzliche phosphoreszierende Schicht beschrieben.

In EP 0 299 744 wird eine zweite Schicht aufgetragen, um die dort eingebetteten Glasperlen besonders gut auf der Oberfläche zu verteilen. Dabei wird diese obere zweite Schicht aus Polyolefinen, Polyolefin-haltigen Terpolymeren oder aus chlorierten Polyolefinharzen gebildet. Dem Fachmann ist jedoch bekannt, dass solche Materialien einem schnellen Abrieb und einer insgesamt nur sehr kurzen Haltbarkeit unterliegen.

In JP 06010319 wird ein Reaktionsharz als Toplayer für eine auf Lösungsmittel oder einer thermoplastischen Schmelze beruhenden Markierung beschrieben. Bei dem Toplayer handelt es sich dabei um ein strahlungshärtendes System, welches vor allem dazu dient Glasperlen zur Steigerung der Lichtreflexion auf die Oberfläche der Straßenmarkierung zu bringen. Eine besondere Hitzebeständigkeit oder Verschmutzungsresistenz ergibt sich mit dem System nicht. Weiterhin bestehen die Nachteile, dass die beiden Schichten nur mit großem zeitlichem Abstand aufgetragen werden können, und dass der Toplayer zusätzlich mittels gezielter Bestrahlung ausgehärtet werden muss.

Ein ganz ähnliches System mit einem klaren Topcoating zum Schutz der Glasperlen findet sich in JP 58063761. Dieses System weist die gleichen Nacheile wie das zuvor beschriebene auf.

Traditionelle Fahrbahn- oder Bodenmarkierungen sollen für das menschliche Auge am Tage ein klar sichtbares Farbsignal bieten und ggf. so ausgestattet sein, dass die Markierungsoberfläche in der Nacht das Scheinwerferlicht eines Fahrzeuges reflektiert und so die Markierung auch in der Nacht für den Fahrer sichtbar ist. Traditionell wird dies durch Einsatz von Glasperlen auf der Markierungsoberfläche erreicht, die partiell eingebettet in den meist weißen oder gelben Markierungsstoff, als Reflexionskörper für das Scheinwerferlicht dienen.

Neben den optischen Eigenschaften muss die Markierungsoberfläche eine ausreichende Griffigkeit aufweisen. Texturierte Markierungen, wie z. B. profilierte Markierungen oder Rüttelstreifen, können darüber hinaus ausgeprägte akustische oder haptische Warnwirkung entfalten. Die Anforderungen an die verkehrstechnischen Eigenschaften von gelben und weißen Markierungen sind z. B. in EN 1436 und nationalen Ausführungsrichtlinien, wie der deutschen ZTV-M13 definiert. Bei Nacht und bei Regen, sowie bei Nebel oder bei Schnee ist die Fahrbahnmarkierung für den Fahrer nur noch sehr schwer oder gar nicht mehr erkennbar. Insbesondere bei längeren trockenen, warmen Klimaperioden beeinträchtigt die Verschmutzung der Markierungsoberfläche die Wahrnehmbarkeit der Markierung sowohl für das menschliche Auge, als auch für die Sensorik autonom fahrender Fahrzeuge.

Moderne Automobiltechnologie bietet elektronische Systeme zur Unterstützung des Fahrers bzw. zur autonomen Fahrzeugsteuerung an. Es kommen dabei u.a. optische Kamerasysteme zur passiven Umfelderkennung im visuellen oder im infraroten Bereich des Lichtes zum Einsatz, wobei das visuelle Signal der traditionellen Markierung eine wesentliche Rolle spielt. Daneben werden auch aktive, z. B. radar- und lasergestützte Detektionssyteme zur Umwelterkennung genutzt. In der Patentliteratur wurden vielfältige Möglichkeiten zur Funktionalisierung von Markierungen für spezifische Detektionssysteme für autonome Fahrzeugsteuerung beschrieben. Z.B. beschreiben WO 2014082821 A1, und WO 2014166693 A1 den Einsatz von Metallpartikeln in Fahrbahnmarkierungen mit verbesserter Mikrowellenreflexion, bzw. Radardetektierbarkeit.

In US 2010291409 A1, WO 2007056820 A1 (physikalisch trocknende Systeme) und WO 2015/053632 A1 (u.a. reaktive Systeme, enthaltend ein hochsiedendes Monomer) werden nachleuchtende Markierungen beschrieben, die sogenannte Luminophore enthalten. Luminophore sind Stoffe die Licht emittieren, nachdem sie zuvor mit kurzwelligerem Licht, durch ionisierende Strahlung oder chemisch angeregt wurden. Das Phänomen beruht auf Phosphoreszenz, Fluoreszenz oder Chemolumineszenz.

Luminophore mit nachleuchtenden Eigenschaften können am Tage durch das Sonnenlicht aktiviert werden und geben die gespeicherte Energie zeitverzögert wieder ab. Diese Eigenschaft ist für ein Nachleuchten in der Dunkelheit bzw. bei Nacht besonders nützlich.

Luminophore mit fluoreszierenden Eigenschaften können am Tage durch Sonnenlicht oder externe Strahlungsquellen wie beispielsweise Scheinwerfer aktiviert werden und emittieren Licht sofort nach der Aktivierung. Fluoreszierende Pigmente werden beispielsweise in Tagesleuchtfarben eingesetzt.

DE 102015015985 A1 beschreibt Mittel und Verfahren zur multifunktionalen Markierung von Straßen. Die Mittel enthalten spezielle Luminophore, eine Acrylharzbasierte Farbe oder Lack und weitere Materialien und soll somit einen Beitrag zur verbesserten Umfeldwahrnehmung von Fahrzeugen mit entsprechender Sensorik leisten. Als weitere Zusätze werden magnetische Zusätze zur elektromagnetischen Detektion der Markierung genannt.

Dabei ermöglicht die spezielle Zusammensetzung der Luminophore insbesondere die Emission von weißem Licht.

DE 102015015985 A1 beansprucht u.a. mehrschichtig aufgebaute Markierungen, wobei sich die Luminophore vorzugsweise nahe der Markierungsoberfläche befinden, lässt aber offen durch welches Verfahren dies erreicht wird. Es wird beschrieben, dass das Mittel durch gängige Applikationsverfahren mittels Ziehschuh, Extruder oder im Spritzverfahren aufgetragen wird.

In Unteranspruch 17 wird beschrieben, dass die Markierung mit dem Mittel anschließend mit einem Lack versiegelt werden kann, in welchen Glasperlen eingestreut sein können.

Damit wären die nachleuchtenden Luminophore vom Lack bedeckt und in ihrer Wirkung abgeschwächt.

Die Funktion des Lacks ist es offenbar die Retroreflexion der Glasperlen zu gewährleisten, wozu allerdings ein Weißpigment, vorzugsweise Titandioxid, im Lack erforderlich wäre. Damit wäre die Tageslichteinwirkung auf das darunterliegende Mittel weitgehend unterdrückt und dieses weitgehend wirkungslos.

Ferner enthalten verschmutzungsarme Markierungen des Stands der Technik zur verbesserten Sichtbarkeit der Markierung bei Nässe oder Dunkelheit Glasperlen zur Retroreflexion an der Markierungsoberfläche. Glasperlen an der Markierungsoberfläche erzeugen jedoch Unebenheiten und keine glatte Oberfläche, so dass sich Schmutz ansammeln kann, der eine Wahrnehmbarkeit der Markierung beeinträchtigt.

Zusammenfassend kann festgestellt werden, dass im Stand der Technik offen bleibt, wie Markierungssysteme aufgebaut sein müssen um eine optimale Effektivität der nachleuchtenden Luminophore zu erzielen und gleichzeitig alle herkömmlichen Anforderungen an die Markierung gemäß der gesetzlichen Bestimmungen wie beispielsweise der ZTV-M13 gewährleisten zu können. Darüber hinaus bleibt unklar mit welchen Markierungsmaterialien besonders dauerhafte multifunktionelle Markierungen hergestellt werden können und mit welchen Applikationsverfahren dies in besonders einfacher Weise gelingt.

US 2014/0061504A1 beschreibt ein mehrschichtiges System, welches auf Seltenerdemetallen basierende Pigmente enthält und damit eine fluoreszenierende Wirkung hat. Dabei weißt das Mehrschichtsystem eine Deckschicht auf, die lösungsmittelbasiert aufgebracht wird, während die Herstellung der anderen Schichten offengelassen wird. Neben der Verwendung dieser Systemen in Formkörpern oder Farben, ist auch der Einsatz in Straßenmarkierungen beschrieben, ohne dass auf deren spezifischen Aufbau oder der Applikation näher eingegangen wird.

EP 3 358 082 A1 beschreibt einen elektroluminescenten Marker, also eine Vorrichtung zur Signalgebung, die elektrisch aktivierbar ist. Beschichtungen irgendeiner Form, insbesondere solche, die zur Straßenmarkierung geeignet wären, sind nicht offenbart.

### Aufgabe

Aufgabe der vorliegenden Erfindung ist die Bereitstellung von mit Luminophoren ausgestatteten Straßenmarkierungen oder Bodenbeschichtungen für den Außenbereich, die gegenüber dem Stand der Technik auch bei sehr hohen Umgebungstemperaturen, wie zum Beispiel in Wüstenregionen, eine besonders lange Haltbarkeit bzw. geringen Abrieb auch bei hoher Verkehrsbelastung aufweisen und gleichzeitig eine im Vergleich mit dem Stand der Technik geringe Schmutzanhaftung aufweisen.

Die Sichtbarkeit der erfindungsgemäßen Markierung bei Nässe und in der Dunkelheit wird gegenüber dem Stand der Technik nicht (nur) durch Glasperlen und deren Retroreflexion erreicht, sondern durch ein Eigenleuchten der Markierung aufgrund von Luminophoren, welche fluoreszierende oder phosphoreszierende Eigenschaften aufweisen. Auch eine Kombination vonfluoreszierenden und phosphoreszierenden Eigenschaften ist möglich, um die Sichtbarkeit der Markierung zu erhöhen.

Aufgabe der vorliegenden Erfindung ist außerdem, die enthaltenen Luminophore festgebunden auf bzw. in der Markierung zu binden und eine ausreichende Belichtung bzw. Aktivieren unter Lichteinwirkung zu ermöglichen sowie ein funktionsgemäßes Leuchten zu erzielen.

Aufgabe der vorliegenden Erfindung ist desweiteren, dass die Straßenmarkierungen bzw. Beschichtungen schmutzabweisende Eigenschaften, ganz besonders auch bei Umgebungstemperaturen von bis zu 50 °C, anhaltender Trockenheit und bei einem hohen Partikelanteil in der Luft, aufweisen.

Darüber hinaus soll eine solche Straßenmarkierung in einfacher Weise realisierbar sein, ohne dass eine zusätzliche Härterkomponente in die schmutzabweisende Reaktionsharzversiegelung eingemischt werden muss.

Weitere nicht explizit genannte Aufgaben ergeben sich aus dem Gesamtzusammenhang der nachfolgenden Beschreibung, Ansprüche und Beispiele.

### Lösung

Gelöst wurden die gestellten Aufgaben durch die Bereitstellung einer neuartigen zweischichtigen Straßenmarkierung oder Bodenbeschichtung. Mit Straßenmarkierungen sind im Rahmen dieser Erfindung dabei sämtliche zu Markierungszwecken auf Fahrbahnen oder Gehwegen aufgebrachten Beschichtungen, die nicht nur temporär z.B. zur kurzfristigen Markierung in einem Baustellenbereich aufgebracht werden, umfasst. Dies schließt insbesondere auch Fahrradwege, Gehsteige oder Rollbahnen für den Flugverkehr mit ein. Bodenbeschichtungen betreffen dabei weitere Beschichtungen von Bodenmaterialien wie Beton, Asphalt, Estrich oder Teer, die sich insbesondere in einem Außenbereich befinden. Es sei darauf hingewiesen, dass mit dem Begriffen Straßenmarkierungen bzw. Bodenbeschichtungen, wenn nicht ausdrücklich anders erwähnt, die Beschichtungen, die bereits auf dem Untergrund appliziert sind, gemeint sind. Im Weiteren wird für der Einfachhalthalber für alle diese Beschichtungen umfassend der Begriff Straßenmarkierung verwendet.

Die erfindungsgemäßen Straßenmarkierungen weisen eine untere Schicht, bei der es sich um eine ausgehärtete 2-K- Reaktionsharzformulierung auf (Meth)acrylatbasis handelt und eine zweite obere Schicht, bei der es sich um eine ausgehärtete Reaktionsharzversiegelung handelt, auf.

Der Begriff Poly(meth)acrylate umfasst im Rahmen der vorliegenden Offenbarung sowohl Polymethacrylate als auch Polyacrylate sowie Copolymere oder Mischungen aus beiden. Die Formulierung (Meth)acrylate umfasst entsprechend Methacrylate, Acrylate und Mischungen aus beiden.

Die untere, erste Schicht besteht insbesondere aus einem Material, welches vor der Aushärtung in einer oder beiden Komponenten mindestens 0,5 Gew% Vernetzer, mindestens 10 Gew% (Meth)acrylatmonomere, mindestens 3 Gew% Präpolymere und optionale weitere Zusatzstoffe enthält.

Die ausgehärtete untere, erste Schicht muss eine hinreichende Flexibilität aufweisen, um eine ausreichend spannungsarme Verbindung zu Asphaltstraßendecken, etwa bei Temperaturschwankungen, wie sie im Wechsel des Tagesrythmus und bei wechselnder Sonneneinstrahlung auftreten, zu gewährleisten und der dynamischen Belastung durch den überrollenden Verkehr dauerhaft widerstehen zu können. Die Oberfläche der ausgehärteten unteren, ersten Schicht weist aufgrund des verarbeitungsbedingt erforderlichen pastösen Charakters eine gewisse Porosität auf.

Bevorzugt weisen die Komponenten des Reaktionsharzes zur Herstellung der unteren ersten Schicht zusammen folgende Inhaltsstoffe auf:
0,5 Gew% bis 30 Gew%, bevorzugt 2 Gew% bis 20 Gew% und besonders bevorzugt 3 Gew% bis 15 Gew% Vernetzer, bevorzugt Di-, Tri- oder Tetra-(meth)acrylate, besonders bevorzugt Dimethacrylate,
10 Gew% bis 96,1 Gew%, bevorzugt 30 Gew% bis 80 Gew% und besonders bevorzugt 30 Gew% bis 40 Gew% (Meth)acrylate und optional mit (Meth)acrylaten copolymerisierbare Komponenten, bevorzugt (Methacrylate mit einem C₁- bis C₆-Alkylrest,
0 Gew% bis 20 Gew% Urethan(meth)acrylate,
3 Gew% bis 40 Gew%, bevorzugt 15 Gew% bis 35 Gew%, besonders bevorzugt bis 25 Gew% Präpolymere, bevorzugt Poly(meth)acrylate und/oder Polyester, besonders bevorzugt Poly(meth)acrylate,
0,1 Gew% bis 5 Gew%, bevorzugt 0,4 bis 2 Gew%, besonders bevorzugt 0,2 bis 0,8 Gew% mindestens eines tertiären Amin, bevorzugt eines tertiären, aromatischen Amins,
0 Gew% bis 25 Gew%, bevorzugt bis 20 Gew%, besonders bevorzugt bis 15 Gew% Kern-Schale Partikel,
0,2 Gew% bis 5 Gew%, bevorzugt bis 3 Gew% mindestens eines Initiator, bevorzugt Dilauroylperoxid und/oder Dibenzoylperoxid
und gegebenenfalls weitere Hilfsstoffe.

Dabei liegen der oder die Initiatoren und das tertiäre Amin vor dem Vermischen in getrennten Komponenten des 2-K-Systems vor.

Insbesondere bevorzugt ist das Reaktionsharz zur Herstellung der ersten Schicht halogenfrei.

Bei den weiteren Hilfsstoffen kann es sich z.B. um Stabilisatoren, Inhibitoren, Regler oder Wachse handeln.

Bevorzugt ist das erfindungsgemäße Reaktionsharz halogenfrei.

Die erste, untere, bzw. innere Schicht kann neben dem ausgehärteten Reaktionsharz, bezogen auf 100 Gew% Reaktionsharz zusätzlich 0,15 Gew% bis 25 Gew% eines anorganischen Pigments, bevorzugt Titandioxid, 0 Gew% bis 5 Gew% Stabilisatoren und/oder Additive und 20 Gew% bis 80 Gew% mineralische und/oder polymere Füllstoffe aufweisen.

Bei der zweiten oberen Schicht handelt es sich erfindungsgemäß um eine ausgehärtete Reaktionsharzversiegelung, die aus bis zu 50 Gew%, bevorzugt aus bis zu 40 Gew%, besonders bevorzugt aus bis zu 10 Gew% Luminophoren, Pigmenten, Füllstoffen und/oder Additiven und zu mindestens 50 Gew%, bevorzugt zu mindestens 60 Gew%, besonders bevorzugt zu mindestens 80 Gew% aus einem ausgehärteten (Meth)acrylatharz, das wiederum zu mindestens 50 Gew% aus auf (Meth)acrylaten basierenden Wiederholungseinheiten und optional Polyestern besteht und eine Glasübergangstemperatur T_{g} von mindestens 60 °C, bevorzugt von mindestens 70 °C aufweist, besonders bevorzugt von mindestens 80 °C zusammengesetzt ist.

Bevorzugt wird die zweite, obere Schicht der Straßenmarkierung durch Aushärten einer Reaktionsharzversiegelung erhalten, wobei diese Reaktionsharzversiegelung vor der Aushärtung mindestens folgende Komponenten enthält:
10 bis 30 Gew%, bevorzugt 15 bis 25 Gew% eines Poly(meth)acrylats und/oder eines Polyesters, bevorzugt eines Poly(meth)acrylats,
40 bis 80 Gew%, bevorzugt 60 bis 75 Gew% Monomere, bei denen es sich um (Meth)acrylate und/oder teilweise mit (Meth)acrylaten copolymerisierbare Monomere handelt, bevorzugt um (Meth)acrylate mit C₁-C₄-Alkylresten,
1 bis 10 Gew%, bevorzugt 2 bis 8 Gew% Vernetzer, bei denen es sich bevorzugt um di- und/ oder tri-(Meth)acrylate handelt,
0 bis 5 Gew%, bevorzugt 0,4 bis 4 Gew% eines tertiären, aromatischen Amins, 0,1 bis 25 Gew%, bevorzugt 0,1 bis 10 Gew% Luminophor(e)
0 bis 25 Gew%, bevorzugt bis 10 Gew% Pigmente und/oder Füllstoffe,
0 bis 10 Gew%, bevorzugt 2 bis 8 Gew% Additive, bei denen es sich um Weichmacher, Paraffine, UV-Absorber, Stabilisatoren und/oder Bläungsmittel handelt, und 0
0 bis 5 Gew%, bevorzugt 0 bis 4 Gew% eines oder mehrerer Initiatoren, die in der Mischung mit dem tertiären Amin erst kurz vor der Applikation zusammengebracht werden, und bei denen es sich besonders bevorzugt um Dilauroylperoxid und/oder Dibenzoylperoxid handelt.

Besonders bevorzugt weisen die Poly(meth)acrylate und/oder Polyester dabei eine Glasübergangstemperatur T_{g} von mindestens 70 °C auf, besonders bevorzugt von mindestens 80 °C. Die Monomerkomponente wiederum besteht bevorzugt zu 50 Gew% aus solchen Monomeren, die im auspolymerisierten Zustand eine Galsübergangstemperatur von mindestens 60°C, bevorzugt von mindestens 70 °C, besonders bevorzugt von mindestens 80 °C aufweisen.

Besonders bevorzugt weisen die Luminophore eine fluoreszierende oder phosphoreszierende Leuchtwirkung im sichtbaren oder im IR-Bereich des Lichts auf, welche mit darauf abgestimmten Kamerasystemen detektiert werden können.

Bei dem Einsatz von Luminophoren mit phosphoreszierender Leuchtwirkung werden besonders bevorzugt Luminophore mit langanhaltender Nachleuchtwirkung eingesetzt.

Die zweite, obere Schicht zur Versiegelung der Straßenmarkierung hat bevorzugt eine Dicke von maximal 500 µm, besonders bevorzugt von maximal 300 µm und ganz besonders bevorzugt von maximal 200 µm. Die erste, untere Schicht hat bevorzugt eine Dicke von maximal 7000 µm. Insbesondere liegt die Dicke der unteren, ersten Schicht zwischen 200 µm und 1000 µm und besonders bevorzugt zwischen 600 µm und 800 µm. Dünnere und dickere Schichten sind ja nach Anwendung möglich. Darüber hinaus sind die mechanischen Eigenschaften der mit den erfindungsgemäßen Reaktionsharzen hergestellten Straßenmarkierung unabhängig von der Auftragsdicken der beiden Schichten ausgezeichnet.

Optional können eine der beiden Schichten oder beide Schichten direkt nach der Applikation mit einem geeigneten Nachstreumittel beaufschlagt worden sein. Geeignete Nachstreumittel sind zum Beispiel Reflexionsmittel, wie Glasperlen, Keramikplättchen oder Aggregate zur Einstellung von Rutschhemmung und/oder Farbeffekten, wie Bauxit, Korund, Granit, Sand oder Glasgranulat, wobei die Aggregate ggf. eingefärbt sein können.

Bevorzugt weist die zweite, obere Schicht bei 23 °C eine Bruchdehnung, gemessen nach DIN 527 von kleiner 7,5 %, besonders bevorzugt kleiner 5,0 % und ganz besonders bevorzugt kleiner 2,5 % auf. Genauso bevorzugt hat das (Meth)acrylatharz zur Herstellung der zweiten Schicht vor der Applikation eine Viskosität bei 23 °C, gemessen nach DIN 53015, zwischen 50 und 500 mPAS, bevorzugt zwischen 50 und 250 mPAS. Das Reaktionsharz für die zweite, obere Schicht weist vor der Aushärtung eine Viskosität gemessen bei 20°C mit einem Brookfield-Viskosimeter unter Verwendung der Spindel Nr2 bei 100 U/min von bevorzugt 100 mPAS bis 3000 mPAS, besonders bevorzugt 1200 mPAS bis 1800 mPAS auf.

Diese Viskosität ermöglicht die Aufbringung der zweiten, oberen Schicht in ausreichender Schichtdicke auch auf texturierten Markierungsoberflächen.

Die erfindungsgemäßen Straßenmarkeirungen weist gegenüber dem Stand der Technik eine Reihe großer Vorteile auf. So weist die zweite, obere Schicht gegenüber der ersten, unteren Schicht eine gute Benetzung der Oberfläche und damit eine gute Adhäsion zu dieser auf. Dies erhöht wiederum die Lebensdauer der Straßenmarkierung. Weiterhin weist die erfindungsgemäße Straßenmarkierung eine hohe Abriebsfestigkeit, auch bei regelmäßigem Überrollen mit schweren Fahrzeugen, auf. Dies gilt insbesondere, wie verlangt, bei besonders hohen Temperaturen und in trockenen und staubigen Umgebungen. Weiterhin wird durch die neuartige obere, zweite Schicht die Sichtbarkeit der Straßenmarkierung nicht beeinträchtigt.

Insbesondere wird eine porenfreie, auch bei erhöhten Temperaturen harte Markierungsstoffoberfläche durch den Einsatz der erfindungsgemäßen schmutzabweisenden Reaktionsharzversiegelung der zweiten, oberen Schicht erzielt. Diese lässt sich auf die untere, erste Schicht, welche in der Regel als eine zuvor verlegte Kaltplastikmarkierungsoberfläche vorliegt, dank niedriger Viskosität und guter Benetzung in dünner Schicht gut verteilen. Nach der Aushärtung erweicht die erfindungsgemäße zweite, obere Schicht auch bei erhöhten Umgebungstemperaturen nicht.

Das in der zweiten bzw. oberen Schicht enthaltene Luminophor führt zu einer fluoreszierenden oder phosphoreszierenden Wirkung der Markierung. Durch geeignete Auswahl des Luminophors können fluoreszierende oder phosphoreszierende Eigenschaften im sichtbaren und IR-Bereich des Lichts erzielt werden, welche durch Kamerasysteme detektiert werden können.

Durch die erfindungsgemäße abriebfeste Eigenschaft der oberen Schicht bleiben die Luminophore auch bei starker Verkehrsbelastung in der Markierung gebunden. Durch Erfindungsgemäße geringe Verschmutzungsneigung der Markierung wird eine effiziente Belichtung der Luminophore erzielt und keine unerwünschte Ab- bzw. Verdeckung des leuchtenden Luminophors durch Schmutz auf der Markierung erreicht.

Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

### Spezielle Aspekte der Straßenmarkierung

Als besagte tertiäre, aromatische Amine, die als Beschleuniger im Rahmen dieser Erfindung Verwendung finden, seien zum Beispiel N,N-Dimethyl-p-toluidin, N,N-bis-(2-Hydroxyethyl)-p-toluidin oder N,N-bis-(2-Hydroxypropyl)-p-toluidin genannt.

Als Initiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide als Radikalinitiator Verwendung. Für Reaktionsharze zur Anwendung zum Beispiel für Straßenmarkierungen sind besonders bevorzugt Dilauroylperoxid oder Dibenzoylperoxid.

In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die zuvor angegebenen Konzentrationen in der erfindungsgemäßen Reaktionsharzen beziehen sich jedoch nur auf den reinen Initiator.

In einer Alternativen Ausführungsform eines alternativen 2K- bzw. 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der optionalen dritten Komponente handelt es sich wieder um die Glaskugeln und eventuell benötigte Haftvermittler.

Ein weiterer Bestandteil des erfindungsgemäßen Reaktionsharzes können die Vernetzer sein. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat,

Poly(urethan)(meth)acrylate Tetraethylenglycol-di(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Straßenmarkierung, das erfindungsgemäße Harz enthaltend, ermöglicht.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Fa. UCB Chemicals.

Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Straßenmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Straßenmarkierungen relativ hohe Konzentration der Urethan(meth)acrylate in dem Reaktionsharz nötig. Das erfindungsgemäße Reaktionsharz enthält zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,ß-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole.

Im Einzelnen wird das Poly(meth)acrylat nach Anteil und Zusammensetzung zweckmäßigerweise im Hinblick auf die gewünschte technische Funktion gewählt werden.

In einer besonders bevorzugten Ausführungsform umfassen die Monomere ganz oder teilweise (Meth)acrylate, welche als Ester der (Meth)acrylsäure mit einem Acetal, Ketal oder Carbonat von Glycerin, substituiertem Glycerin oder Trimethylolpropan bzw. substituierten Trimethylolpropan, d. h. um Monomere der allgemeinen Strukturformeln (1) oder (2), vorliegen:

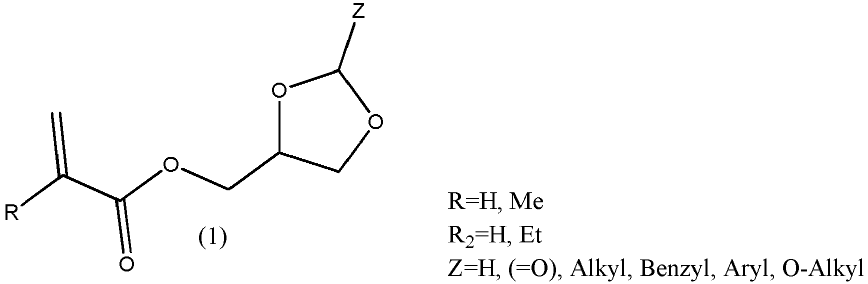

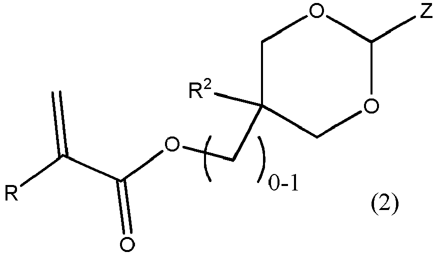

Bevorzugte Beispiele für solche Monomere sind Glycerinformal(meth)acrylat, Trimethylolpropan-formal-(meth)acrylat oder Isopropylidenglycerin(meth)acrylat (Solketal-methacrylat). Ein besonderer Vorteil dieser Monomere ist der besonders geringe Dampfdruck und damit die Geruchslosigkeit des Reaktionsharzes vor der Applikation.

Die erfindungsgemäßen Reaktionsharze können darüber hinaus optional Kern-Schale Partikel als Schlagzähmodifizierungsmittel enthalten. Die Zugabe solcher Partikel in ein Reaktionsharz kann in der internationalen Anmeldung WO 2011/072846, bzw. in der deutschen Patentanmeldung 102011003317.3 nachgelesen werden. Die Kern-Schale Partikel führen zu einer höheren mechanischen Belastbarkeit und darüber hinaus zu einer Verminderung der Rissfortpflanzung und einer höheren Verträglichkeit punktueller Belastung.

Die Kern-Schale Partikel müssen gut dispergiert in der Monomer-Polymer Mischung des Reaktionsharzes vorliegen um keine Trübungen oder Klumpenbildung zu verursachen. Dies kann durch entsprechendes Rühren oder mittels einer anderen bekannten Dispergiertechnik einfach sichergestellt werden.

Luminophore mit fluoreszierenden Eigenschaften können aus einer Substanz oder einer Mischung mehrerer Substanzen bestehen, wobei die Luminophore mit fluoreszierenden Eigenschaften beispielsweise
- aus Seltenerdmetall gedopten gemischten und reinen Erdalkalialuminaten, -silikaten und - phosphaten,
- aus nanoskaligen Materialien mit fluroeszierenden Eigenschaften, nanoskaligen Zinkoxid, Quantenpunkte basierend auf Kohlenstoffstruktur oder Quantenpunkte basierend auf Silicium,
- auf Metall-gedopen Zinksulfid,
- auf Basis organischer Verbindungen mit fluoreszenzeigenschaften wie beispielsweise Xanthen Derivative, Cyanin Derivative, Squarain Derivative, Naphthalin Derivative, Coumarin Derivative, Oxadiazol Derivative, Anthracen Derivative, Pyren Derivative, Oxazin Derivative, Acridin Derivative, Arylmethin Derivative, Tetrapyrrol Derivative und Stilben Derivative,
als Korn bzw. Mehl, Pulver, Feinstpartikel, Nanomaterial oder Lösung vorliegen kann. Bevorzugt werden Luminophore mit fluoreszierenden Eigenschaften so gewählt, dass sie durch Licht im nahen Ultraviolettbereich (315 - 400 nm) angeregt werden können.

Luminophore mit phosphoreszierenden Eigenschaften können aus einer Substanz oder einer Mischung mehrerer Substanzen bestehen, wobei die nachleuchtenden Luminophore beispielsweise aus Seltenerdmetall gedopten gemischten und reinen Erdalkalialuminaten, -silikaten und - phosphaten oder aus Metall gedopten Zinksulfid als Korn bzw. Mehl, Pulver, Feinstpartikel oder Nanomaterial vorliegen kann.

Die Luminophore sollen bevorzugt bei Tageslicht bei weißes Erscheinungsbild bzw. nur eine geringe oder keine Eigenfärbung aufweisen, sodass das Erscheinungsbild der Markierung nicht negativ beeinflusst wird.

Die Luminophore müssen insbesondere eine hohe Photostabilität aufweisen, damit sie nach der Applikation durch Umwelteinflüsse und Sonnenlicht nicht ihre lumineszierenden Eigenschaften nach kurzer Zeit verlieren.

Als Hilfs- und Zusatzstoffe können zusätzlich Regler, Weichmacher, Paraffine, Stabilisatoren, Inhibitoren, Wachse und/oder Öle eingesetzt werden.

Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.

Als Weichmacher werden vorzugsweise Ester, Polyole, Öle, niedermolekulare Polyether oder Phthalate eingesetzt.

Zusätzlich können den Formulierungen zur Straßenmarkierung Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.

Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Straßenmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.

Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Straßenmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Verfahren

Grundsätzlich ist bezüglich der Applikationstechnologie der beiden Schichten die erfindungsgemäße Straßenmarkierung flexibel einsetzbar. Die erfindungsgemäßen Reaktionsharze, bzw. Kaltplastiken können z.B. sowohl im Sprüh-, im Gieß- als auch im Extrusionsverfahren bzw. manuell mittels einer Kelle, einer Rolle oder einem Rakel aufgetragen werden.

Zusätzlich zu den beschriebenen neuartigen zweischichtigen, besonders hitzebeständigen und schmutzabweisenden Straßenmarkierungen ist auch ein gleichfalls neuartiges Verfahren zu deren Verlegung Bestandteil der vorliegenden Erfindung. Dieses Verfahren weist folgende Verfahrensschritte auf:
a) Mischen der Komponenten eines 2K-Reaktionsharzes, welches nach der Aushärtung die untere, erste Schicht bildet,
b) Applikation des Reaktionsharzes aus Verfahrensschritt a) auf der zu beschichtenden Oberfläche, wie z.B. einer Straßenoberfläche innerhalb der Topfzeit für das Reaktionsharz,
c) optionales Mischen der Komponenten, welche nach der Aushärtung die obere, zweite Schicht bilden,
d) Applikation des Reaktionsharzes zur Bildung der zweiten, oberen Schicht auf der bereits in Verfahrensschritt b)auf der Oberfläche applizierten ersten, unteren Schicht innerhalb der Topfzeit für das Reaktionsharz und
e) optionales Bestreuen, wobei Verfahrensschritt e) vor, parallel zu oder nach Verfahrensschritt d) durchgeführt werden kann. Je nach Zeitpunkt sind die Glasperlen mehr oder weniger stark in die Matrix der oberen, zweiten Schicht eingebettet.

Der Verfahrensschritt c) ist wie beschrieben optional, da nicht zwingend ein 2K-Reaktionsharz verwendet werden muss. In einer weiteren Alternative ist es zum Beispiel möglich, das Reaktionsharz zur Bildung der oberen, ersten Schicht mittels Strahlenhärtung, wobei bevorzugt entsprechende Härter dem Reaktionsharz zugesetzt sind, oder Plasmahärtung auszuhärten.

In der Variante eines 2K-Reaktionsharzes, welches mindestens einen Beschleuniger und mindestens einen Initiator aufweist wird der optionale Verfahrensschritt c) des Mischens des 2K-Systems vor, parallel zu oder nach den Verfahrensschritten a) oder b) durchgeführt. Der genaue Zeitpunkt hängt insbesondere von den jeweiligen Topfzeiten und damit den offenen Zeiten zur Applikation beider Schichten ab.

In einer besonderen Ausführungsform dieser Variante erfolgt die Aufbringung der zweiten Schicht in Verfahrensschritt d), nach Durchführung des nicht optionalen Verfahrensschritts c) und nach Aushärtung der ersten, unteren Schicht. Dabei kann insbesondere ein Nachstreumittel in mindestens eine der beiden oder in beide Schichten innerhalb der jeweiligen Topfzeit eingestreut werden.

In einer dritten Variante des Verfahrens erfolgt die Aufbringung der zweiten Schicht in Verfahrensschritt d), welche selbst keinen Initiator, jedoch bevorzugt einen Beschleuniger in Form eines der oben beschriebenen Amine enthält, und ohne Durchführung eines Mischens gemäß Verfahrensschritt c), innerhalb der Topfzeit der ersten, unteren Schicht. Dabei diffundieren Initiatoren bzw. freie Radikale aus der in der Aushärtung befindlichen ersten, unteren Schicht in die gerade applizierte zweite, obere Schicht und starten dort die Aushärtung. Diese dritte Variante ist in der Durchführung wenig aufwendig, da auf Verfahrensschritt c) verzichtet werden kann. Optional können auch bei dieser Verfahrensvariante Nachstreumittel in eine der beiden oder in beide Schichten innerhalb deren jeweiligen Topfzeit eingestreut werden.

Unabhängig von der Variante des Verfahrens wird die Verlegung der Straßenmarkierung bevorzugt maschinell, mittels eines Fahrzeugs oder einer Vorrichtung durchgeführt. Dabei erfolgt zunächst die Applikation der ersten, unteren Schicht aus einer oder mehreren Auslassvorrichtungen auf die Fahrbahn- oder sonstige Außenoberfläche gemäß Verfahrensschritt b). Anschließend, bevorzugt innerhalb der Topfzeit der ersten Schicht wird die zweite Schicht ohne Initiator mittels einer oder mehrerer Düsen gemäß Verfahrensschritt d) auf die erste noch nicht ausgehärtete Schicht aufgesprüht und aus einer oder mehreren optionalen Auslassvorrichtungen die optionale Auflage von Glasperlen auf eine der beiden Schichten gemäß Verfahrensschritt e) noch innerhalb der Topfzeit der betreffenden Schicht durchgeführt. Beispielsweise sind die drei Düsen dabei in Bewegungsrichtung maximal 2 m, bevorzugt maximal 1 m voneinander entfernt und werden gleichzeitig betrieben. Damit kann die Reaktionsharzversiegelung der zweiten, oberen Schicht in einfacher Weise in 1K-Verfahren, etwa durch Aufsprühen mit herkömmlichen 1K-Farbspritzmaschinen erfolgen und die Topfzeitproblematik bei der sonst üblichen Verarbeitung in Mischung mit Härter vermieden werden.

Die Topfzeit, die auch als offene Zeit bezeichnet werden kann, der 2K-Reaktionsharze hängt insbesondere von der jeweiligen Zusammensetzung des Reaktionsharzes, der Art und der Konzentration der Initiatoren bzw. Beschleuniger und von der Temperatur bei der appliziert wird, ab. Eine solche Topfzeit, die nach Stand der Technik gebräuchlich ist, liegt z.B. in der Regel zwischen 2 und 40 min. Zur sicheren Verlegung der Markierung ist z.B. ein Mischen der Komponenten in den Verfarhensschritten a) bzw. c) während des Verarbeitens in modernen Markierungsmaschinen, die über eine der Auftragsdüse vorgeschaltete Mischkammer verfügen, möglich.

Insbesondere werden die zweischichtigen, erfindungsgemäßen Straßenmarkierungen in einem Verfahren angewandt, bei dem vor, während oder direkt nach der Aufbringung der Kaltplastik auf einer Fahrbahnoberfläche Glaskugeln zugegeben werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1 - Vergleich) Herkömmliche einschichtige Straßenmarkierung:

Eine 2-Komponentenkaltplastikmasse wurde als Beispiel für eine herkömmliche einschichtige Straßenmarkierung wie folgt auf Basis eines 2-K Reaktionsharzbindemittels DEGAROUTE 465 der Firma Evonik Industries AG formuliert:

**Tabelle 1 - Kaltplastikformulierung**

| | |
|---|---|
| Reaktionsharz: | 20 Gew.-% DEGAROUTE 465 |
| Dispergieradditiv: | 0,1 Gew.-% Disperbyk 167 |
| Rheologieadditiv: | 0,1 Gew.-% Byk D 410 |
| Rheologieadditiv: | 0,1 Gew.-% Bentone 27 |
| Pigment: | 10 Gew.-% Titandioxid |
| Feinfüllstoff: | 20 Gew.-% Omyacarb 15GU |
| Grobfüllstoff: | 25 Gew.-% Cristobalite M72 |
| Premix beads: | 25 Gew.-% Glasperlen (50 - 250 µm) |

Die Kaltplastikmasse weist eine dynamische Viskosität von 15000 mPas, gemessen bei 23°C mittels Haake VT 02 (2) auf.

Die Kaltplastikmasse wird mit 2 Gew.-% Härterpulver der Firma Evonik Industries AG (Benzoylperoxid 50% in Phthalat)vermischt und binnen mittels eines Ziehschuhs mit 2 mm Spaltbreite auf eine Oberfläche bei 23°C aufgebracht,
wobei die Topfzeit 10 Minuten und die Härtezeit 30 min der initierten Kaltplastikmasse beträgt.

Die Shore-D Härte der Kaltplastik gemäß DIN 53505 gemessen bei 23°C nach 72h Konditionierung nach der Aushärtung beträgt 52 Einheiten.

Bei Verwendung dieser Straßenmarkierung insbesondere auf verkehrsreichen, asphaltierten Straßen und anhaltend trockener, heißer (Tagestemperaturen oberhalb 40°C) Witterung verschmutzt diese herkömmliche einschichtige Straßenmarkierung stark, ist für die Verkehrsteilnehmer nicht mehr gut sichtbar und lässt sich durch Wasser (Regen) nicht wieder reinigen.

### Beispiel 2 - Vergleich: Nicht erfindungsgemäße zweischichtige Straßenmarkierung

Zunächst wird die Kaltplastikmasse aus Beispiel 1 wie beschrieben mit 2 Gew.-% Härterpulver als erste Schicht auf die Oberfläche aufgetragen. Nach Aushärtung dieser ersten Schicht, d. h. nach 30 Minuten wird eine nicht erfindungsgemäße Reaktionsharzversiegelung in Form einer Mischung aus 2 Gew-% Härterpulver und 98 Gew.-% reinem DEGAROUTE 465 2K-Reaktionsharz mittels einer Rolle in einer 300µm dicken Schicht als zweite Schicht auf die erste Schicht aufgetragen.

DEGAROUTE 465 ist ein 2K-Reaktionsharz mit einer dynamischen Viskosität von 300 mPas bei 23°C gemäß DIN 53018 mittels Brookfield DV-II mit Spindel 1/30 UpM gemessen, welches folgende Eigenschaften nach Aushärtung und anschließend 72h Konditionierung ausgehärteten Zustand untersucht:

| | |
|---|---|
| Glasübergangstemperatur: | <30°C (DIN EN ISO 11357-1) |
| Shore-A Härte: | 50 Einheiten (gemäß DIN 53505 bei 23°C) |
| Bruchdehnung: | 230% (DIN EN ISO 527 bei 23°C) |
| Zugfestigkeit: | 7 MPa (DIN EN ISO 527 bei 23°C) |

Bei Verwendung dieser nicht erfindungsgemäßen zweischichtigen Straßenmarkierung unter den genannten Bedingungen insbesondere auf verkehrsreichen, asphaltierten Straßen und anhaltend trockener, heißer (Tagestemperaturen oberhalb 40°C) Witterung verschmutzt diese herkömmliche einschichtige Straßenmarkierung stark und lässt sich durch Wasser (Regen) nicht wieder reinigen.

### Beispiel 3 - Erfindung: Erfindungsgemäße zweischichtige Straßenmarkierung mit Luminophoren und erfindungsgemäße Reaktionsharz-versiegelung mit Luminophoren

Zur Herstellung der erfindungsgemäßen Reaktionsharz-versiegelung mit Luminophoren wurde als Polymerkomponente wurde ein Suspensionspolymerisat, welches ausschließlich aus Methylmethacrylat (MMA) Monomereinheiten besteht und eine Molmasse von 80000 g/mol (Mw)(ermittelt durch SEC gegen PMMA Standards), sowie eine Glasübergangstemperatur (Tg) von 116°C ermittelt nach DIN EN ISO 11357-1 aufweist.

Diese Polymerkomponente wurde in Methylmethacrylat gelöst, mit Vernetzer, Beschleuniger gemäß folgender Zusammen-setzung (siehe Tabelle 2) vermischt und ein pulverförmiges Luminophor eindispergiert:

**Tabelle 2**

| | | |
|---|---|---|
| Polymerkomponente: | Rei nacrylatpolym er | 22,0 Gew.-% |
| Monomerkomponente: | Methylmethacylat | 63,5 Gew.-% |
| Vernetzer: | 1,4-Butandioldimethacrylat | 5,0 Gew.-% |
| Beschleuniger: | N,N-Bis-(2-hydroxy-propyl)-p-toluidin | 2,0 Gew.-% |
| Additive: | | 4,9 Gew.-% |
| Dispergieradditiv: | Disperbyk 167 (Byk Chemie) | 0,1 Gew.-% |
| Rheologieadditiv: | Byk D 410 (Byk Chemie) | 0,5 Gew.-% |
| Luminophor: | Lumilux Grün SN-F2 (Honeywell) | 2,0 Gew.-% |

wobei das Gemisch, d. h. die flüssige Reaktionsharz-versiegelung mit eindispergierten Luminophor, bei 23°C eine dynamische Viskosität von 60 mPas gemessen nach DIN 53018 mittels Brookfield DV-II mit Spindel 1/30 UpM aufweist.

Durch Vermischen der Reaktionsharzversiegelung mit 1 Gew.-% Initiator (Benzoylperoxid, Härterpulver der Firma Evonik Industries AG) wird die Versiegelung bei Raumtemperatur zur Aushärtung gebracht, wobei Topfzeit 9 Minuten und die Härtezeit 25 Minuten beträgt und ausgehärtete Reaktionsharzversiegelung nach 72 h Konditionierung folgende Eigenschaften aufweist:

| | |
|---|---|
| Glasübergangstemperatur: | 74°C (DIN EN ISO 11357-1) |
| Shore-D Härte: | 77 Einheiten (gemäß DIN 53505 bei 23°C) |
| Bruchdehnung: | 2% (DIN EN ISO 527 bei 23°C) |
| Zugfestigkeit: | 40 MPa (DIN EN ISO 527 bei 23°C) |
| Zug-E-Modul: | 2800 MPa (DIN EN ISO 527 bei 23°C) |

Zur Herstellung der erfindungsgemäßen zweischichtigen Straßenmarkierung wird die Kaltplastikmasse aus Beispiel 1 wie beschrieben mit 2 Gew.-% Härterpulver als erste Schicht auf die Oberfläche aufgetragen. Nach Aushärtung dieser ersten Schicht, d. h. nach 30 Minuten wird erfindungsgemäße Reaktionsharzversiegelung mit Luminophoren in Form einer Mischung aus 1 Gew-% Härterpulver und 99 Gew.-% reinem 2K-Reaktionsharz mit Luminophor (Zusammensetzung gemäß Tabelle 2) mittels einer Rolle in einer 150µm dicken Schicht als zweite Schicht auf die erste Schicht, d. h. auf die ausgehärtete Kaltplastikmarkierung aufgetragen.

Bei Verwendung dieser erfindungsgemäßen Straßenmarkierung auf verkehrsreichen, asphaltierten Straßen und anhaltend trockener, heißer (Tagestemperaturen oberhalb 40°C) Witterung verschmutzt die erfindungsgemäße zweischichtige Straßenmarkierung weniger stark und lässt sich besser wieder reinigen, d. h. sie bleibt gegenüber herkömmlichen einschichtigen Markierungen analog Beispiel 1 oder nicht erfindungsgemäßen zweischichtigen Markierungen mit nicht erfindungsgemäßen Versiegelungen analog Beispiel 2 für den Verkehrsteilnehmer länger sichtbar und lässt sich durch Wasser (Regen) wieder reinigen.

Die verschmutzungsresistente Markierung ist durch das in der Versiegelung enthaltene Luminophor für darauf abgestimmte Kamerasysteme gut sichtbar.

Die geringere Schmutzaufnahme führt zu einem effizienten Belichten des Luminophors und zu einem gut sichtbaren und intensiven Nachleuchten.

## Patentansprüche

1. Zweischichtige, lumineszierende Straßenmarkierung oder Bodenbeschichtung, aufweisend eine untere, erste Schicht, bei der es sich um eine ausgehärtete 2-K-Reaktionsharzformulierung auf (Meth)acrylatbasis handelt, welche vor der Aushärtung in einer oder in beiden Komponenten mindestens 0,5 Gew% Vernetzer, mindestens 10 Gew% (Meth)acrylatmonomere, mindestens 3 Gew% Präpolymere und optional weitere Zusatzstoffe enthält, **dadurch gekennzeichnet, dass** es sich bei der zweiten, oberen Schicht um eine ausgehärtete Reaktionsharzversiegelung handelt, die aus bis zu 50 Gew% Luminophoren, Pigmenten, Füllstoffen und/oder Additiven und zu mindestens 50 Gew% aus einem ausgehärteten (Meth)acrylatharz besteht, das wiederum zu mindestens 50 Gew% aus auf (Meth)acrylaten basierenden Wiederholungseinheiten besteht und eine Glasübergangstemperatur T_{g} von mindestens 60 °C aufweist.

2. Straßenmarkierung oder Bodenbeschichtung gemäß Anspruch 1, **dadurch gekennzeichnet, dass** die zweite, obere Schicht mindestens 80 Gew% ausgehärteten (Meth)acrylatharz und maximal 20 Gew% Luminophore, Pigmente, Füllstoffe und/oder Additive enthält.

3. Straßenmarkierung oder Bodenbeschichtung gemäß Anspruch 1 oder 2, **dadurch gekennzeichnet, dass** das ausgehärtete (Meth)acrylatharz der zweiten, oberen Schicht eine Glasübergangstemperatur T_{g} von mindestens 70 °C aufweist.

4. Straßenmarkierung oder Bodenbeschichtung gemäß einem der Ansprüche 1 bis 3, **dadurch gekennzeichnet, dass** die Reaktionsharzversiegelung vor der Aushärtung zur zweiten, oberen Schicht 10 bis 30 Gew% eines Poly(meth)acrylats und/oder eines Polyesters, 40 bis 80 Gew% Monomere, bei denen es sich um (Meth)acrylate und/oder teilweise mit (Meth)acrylaten copolymerisierbare Monomere handelt, 1 bis 10 Gew% Vernetzer, 0 bis 5 Gew% eines tertiären, aromatischen Amins, 0,1 bis 25 Gew% Luminophore, 0 bis 25 Gew% Pigmente und/oder Füllstoffe, 1 bis 10 Gew% Additive, bei denen es sich um Weichmacher, Paraffine, UV-Absorber, Stabilisatoren und/oder Bläungsmittel handelt, und 0 bis 5 Gew% eines oder mehrerer Initiatoren, die in der Mischung mit dem tertiären Amin erst kurz vor der Applikation zusammengebracht werden, enthält, wobei die Poly(meth)acrylate und/oder Polyester eine Glasübergangstemperatur T_{g} von mindestens 70 °C aufweisen und die Monomerkomponente zu 50 Gew% aus solchen Monomeren besteht, die im auspolymerisierten Zustand eine Glasübergangstemperatur von mindestens 60°C aufweisen.

5. Straßenmarkierung oder Bodenbeschichtung gemäß Anspruch 4, **dadurch gekennzeichnet, dass** die Reaktionsharzversiegelung vor der Aushärtung zur zweiten, oberen Schicht 15 bis 25 Gew% eines Poly(meth)acrylats, 60 bis 75 Gew% (Meth)acrylate mit C₁-C₄-Alkylresten, 2 bis 8 Gew% di- und/ oder tri-(Meth)acrylate, 0,4 bis 4 Gew% eines tertiären, aromatischen Amins, 0,1 bis 10 Gew% Luminophore, 0 bis 10 Gew% Pigmente und/oder Füllstoffe, 2 bis 8 Gew% Additive und 0 bis 4 Gew% Dilauroylperoxid und/oder Dibenzoylperoxid enthält, wobei die Poly(meth)acrylate und die auspolymerisierten (Meth)acrylate jeweils eine Glasübergangstemperatur T_{g} von mindestens 70 °C aufweisen.

6. Straßenmarkierung oder Bodenbeschichtung gemäß einem der Ansprüche 1 bis 5, **dadurch gekennzeichnet, dass** die beiden Komponenten des Reaktionsharzes zur Herstellung der ersten, unteren Schicht zusammen folgende Inhaltsstoffe aufweisen: 0,5 Gew% bis 30 Gew% Vernetzer,
10 Gew% bis 90,2 Gew% (Meth)acrylate und optional mit (Meth)acrylaten copolymerisierbare Komponenten,
4 Gew% bis 20 Gew% Urethan(meth)acrylate,
3 Gew% bis 40 Gew% Präpolymere,
0,1 Gew% bis 5 Gew% mindestens eines tertiären Amins,
1 Gew% bis 25 Gew% Kern-Schale Partikel,
0,2 Gew% bis 5 Gew% mindestens eines Initiators, wobei der oder die Initiatoren und das tertiäre Amin vor dem Vermischen in getrennten Komponenten des 2-K-Systems vorliegen, und gegebenenfalls weitere Hilfsstoffe.

7. Straßenmarkierung oder Bodenbeschichtung gemäß Anspruch 6, **dadurch gekennzeichnet, dass** die beiden Komponenten des Reaktionsharzes zur Herstellung der ersten, unteren Schicht zusammen folgende Inhaltsstoffe aufweisen:
2 Gew% bis 20 Gew% Di-, Tri- oder Tetra-(meth)acrylate,
30 Gew% bis 80 Gew% (Meth)acrylate und optional mit (Meth)acrylaten copolymerisierbare Komponenten,
0 Gew% bis 20 Gew% Urethan(meth)acrylate,
15 Gew% bis 35 Gew% Poly(meth)acrylate und/oder Polyester,
0,4 Gew% bis 2,0 Gew% mindestens eines tertiären Amins,
0 Gew% bis 20 Gew% Kern-Schale Partikel,
0,3 Gew% bis 3 Gew% Initiator, wobei der Initiator und das tertiäre Amin in getrennten Komponenten des 2-K-Systems vorliegen, und gegebenenfalls weitere Hilfsstoffe.

8. Straßenmarkierung oder Bodenbeschichtung gemäß Anspruch 7, **dadurch gekennzeichnet, dass** das Reaktionsharz zur Herstellung der ersten, unteren Schicht halogenfrei ist, und dass das Reaktionsharz folgende Inhaltsstoffe aufweist:
3 Gew% bis 15 Gew% Dimethacrylate,
30 Gew% bis 40 Gew% (Meth)acrylate und optional mit (Meth)acrylaten copolymerisierbare Komponenten,
0 Gew% bis 20 Gew% Urethan(meth)acrylate,
15 Gew% bis 25 Gew% Poly(meth)acrylate,
0,2 bis 0,8 Gew% tertiäre Amine,
0 Gew% bis 15 Gew% Kern-Schale Partikel enthaltend Polymethacrylate,
0,2 Gew% bis 3 Gew% Dilauroylperoxid und/oder Dibenzoylperoxid als Initiator und gegebenenfalls weitere Hilfsstoffe.

9. Straßenmarkierung oder Bodenbeschichtung gemäß mindestens einem der Ansprüche 1 bis 8, **dadurch gekennzeichnet, dass** die erste, untere Schicht neben dem ausgehärteten Reaktionsharz, bezogen auf 100 Gew% Reaktionsharz 0,15 Gew% bis 25 Gew% eines anorganischen Pigments, bevorzugt Titandioxid, 0 Gew% bis 5 Gew% Stabilisatoren und/oder Additive und 20 Gew% bis 80 Gew% mineralische und/oder polymere Füllstoffe aufweist.

10. Straßenmarkierung oder Bodenbeschichtung gemäß mindestens einem der Ansprüche 1 bis 9, **dadurch gekennzeichnet, dass** die zweite, obere Schicht bei 23 °C eine Bruchdehnung, gemessen nach DIN 527 kleiner 7,5 % aufweist, und dass das (Meth)acrylatharz zur Herstellung der zweiten, oberen Schicht vor der Applikation eine Viskosität bei 23 °C, gemessen nach DIN 53015 zwischen 50 und 500 mPAS aufweist.

11. Straßenmarkierung oder Bodenbeschichtung gemäß Anspruch 10, **dadurch gekennzeichnet, dass** die Bruchdehnung kleiner 2,5 % ist, und dass das die Viskosität des (Meth)acrylatharzes vor der Applikation zwischen 50 und 250 mPAS liegt.

12. Straßenmarkierung oder Bodenbeschichtung gemäß mindestens einem der Ansprüche 1 bis 11, **dadurch gekennzeichnet, dass** die zweite, obere Schicht eine Dicke von maximal 500 µm aufweist.

13. Straßenmarkierung oder Bodenbeschichtung gemäß Anspruch 12, **dadurch gekennzeichnet, dass** die zweite, obere Schicht eine Dicke von maximal 200 µm aufweist.

14. Verfahren zur Verlegung einer besonders hitzebeständigen und schmutzabweisenden Straßenmarkierung, **dadurch gekennzeichnet, dass** dieses Verfahren folgende Verfahrensschritte aufweist: a) Mischen der Komponenten eines Reaktionsharzes gemäß einem der Ansprüche 6 bis 9, b) Applikation des Reaktionsharzes auf der Straßenoberfläche innerhalb der Topfzeit für das Reaktionsharz, c) optionales Mischen der Komponenten gemäß einem der Ansprüche 4 oder 5 zur Herstellung der zweiten, oberen Schicht, d) Applikation des Reaktionsharzes auf der Straßenoberfläche innerhalb der Topfzeit für das Reaktionsharz und e) optionales Bestreuen mit Glasperlen, wobei der optionale Verfahrensschritt c) vor, parallel zu oder nach den Verfahrensschritten a) oder b) und Verfahrensschritt e) vor, parallel zu oder nach Verfahrensschritt d) durchgeführt werden kann.

15. Verfahren gemäß Anspruch 14, **dadurch gekennzeichnet, dass** die Aufbringung der zweiten, oberen Schicht in Verfahrensschritt d), nach Durchführung des nicht optionalen Verfahrensschritts c) und nach Aushärtung der ersten, unteren Schicht erfolgt, wobei Nachstreumittel in mindestens eine der beiden Schichten innerhalb der jeweiligen Topfzeit eingestreut werden.

16. Verfahren gemäß Anspruch 15, **dadurch gekennzeichnet, dass** die Aufbringung der zweiten, oberen Schicht in Verfahrensschritt d), welche selbst keinen Initiator enthält und ohne Durchführung des Verfahrensschritts c), innerhalb der Topfzeit der ersten, unteren Schicht erfolgt, wobei optional Nachstreumittel in eine der beiden Schichten innerhalb deren Topfzeit eingestreut werden.

17. Verfahren gemäß Anspruch 14, **dadurch gekennzeichnet, dass** die Verlegung maschinell, mittels eines Fahrzeugs oder einer Vorrichtung erfolgt, wobei zunächst die Applikation der ersten, unteren Schicht aus einer oder mehreren Auslassvorrichtungen auf die Straßen- oder sonstige Außenoberfläche gemäß Verfahrensschritt b) aufgebracht, anschließend noch innerhalb der Topfzeit der ersten Schicht die zweite Schicht ohne Initiator mittels einer oder mehrerer Düsen gemäß Verfahrensschritt d) auf die erste noch nicht ausgehärtete Schicht aufgesprüht und aus einer oder mehreren optionalen Auslassvorrichtungen die optionale Auflage von Glasperlen auf eine der beiden Schichten gemäß Verfahrensschritt e) noch innerhalb der Topfzeit der betreffenden Schicht erfolgt, und wobei die drei Düsen in Bewegungsrichtung maximal 2 m voneinander entfernt liegen und gleichzeitig betrieben werden.

## Claims

1. Two-layer, luminescent road marking or ground coating having a lower, first layer which is a cured 2-pack (meth)acrylate-based reactive resin formulation containing, prior to curing, in one or in both packs, at least 0.5% by weight of crosslinker, at least 10% by weight of (meth)acrylate monomers, at least 3% by weight of prepolymers and optionally further additives, **characterized in that** the second, upper layer is a cured reactive resin seal composed of up to 50% by weight of luminophores, pigments, fillers and/or additives and of at least 50% by weight of a cured (meth)acrylate resin consisting in turn to an extent of at least 50% by weight of repeat units based on (meth)acrylates and having a glass transition temperature T_{g} of at least 60°C.

2. Road marking or ground coating according to Claim 1, **characterized in that** the second, upper layer contains at least 80% by weight of cured (meth)acrylate resin and not more than 20% by weight of luminophores, pigments, fillers and/or additives.

3. Road marking or ground coating according to Claim 1 or 2, **characterized in that** the cured (meth)acrylate resin in the second, upper layer has a glass transition temperature T_{g} of at least 70°C.

4. Road marking or ground coating according to any of Claims 1 to 3, **characterized in that** the reactive resin seal, prior to curing to give the second, upper layer, contains 10% to 30% by weight of a poly(meth)acrylate and/or a polyester, 40% to 80% by weight of monomers, which are (meth)acrylates and/or partly monomers copolymerizable with (meth)acrylates, 1% to 10% by weight of crosslinker, 0% to 5% by weight of a tertiary aromatic amine, 0.1% to 25% by weight of luminophores, 0% to 25% by weight of pigments and/or fillers, 1% to 10% by weight of additives, which are plasticizers, paraffins, UV absorbers, stabilizers and/or blueing agents, and 0% to 5% by weight of one or more initiators, which are combined only shortly before application with the tertiary amine in the mixture, where the poly(meth)acrylates and/or polyesters have a glass transition temperature T_{g} of at least 70°C and the monomer component consists to an extent of 50% by weight of those monomers which, in the fully polymerized state, have a glass transition temperature of at least 60°C.

5. Road marking or ground coating according to Claim 4, **characterized in that** the reactive resin seal, prior to curing to give the second, upper layer, contains 15% to 25% by weight of a poly(meth)acrylate, 60% to 75% by weight of (meth)acrylates having C₁-C₄-alkyl radicals, 2% to 8% by weight of di- and/or tri(meth)acrylates, 0.4% to 4% by weight of a tertiary aromatic amine, 0.1% to 10% by weight of luminophores, 0% to 10% by weight of pigments and/or fillers, 2% to 8% by weight of additives and 0% to 4% by weight of dilauroyl peroxide and/or dibenzoyl peroxide, where the poly(meth)acrylates and the fully polymerized (meth)acrylates each have a glass transition temperature T_{g} of at least 70°C.

6. Road marking or ground coating according to any of Claims 1 to 5, **characterized in that** the two packs of the reactive resin for production of the first, lower layer together have the following ingredients: 0.5% by weight to 30% by weight of crosslinker,
10% by weight to 90.2% by weight of (meth)acrylates and optionally components copolymerizable with (meth)acrylates,
4% by weight to 20% by weight of urethane (meth)acrylates,
3% by weight to 40% by weight of prepolymers,
0.1% by weight to 5% by weight of at least one tertiary amine,
1% by weight to 25% by weight of core-shell particles,
0.2% by weight to 5% by weight of at least one initiator, where the initiator(s) and the tertiary amine, prior to mixing, are present in separate packs of the 2-pack system, and optionally further auxiliaries.

7. Road marking or ground coating according to Claim 6, **characterized in that** the two packs of the reactive resin for production of the first, lower layer together have the following ingredients:
2% by weight to 20% by weight of di-, tri- or tetra(meth)acrylates,
30% by weight to 80% by weight of (meth)acrylates and optionally components copolymerizable with (meth)acrylates,
0% by weight to 20% by weight of urethane (meth)acrylates,
15% by weight to 35% by weight of poly(meth)acrylates and/or polyesters,
0.4% by weight to 2.0% by weight of at least one tertiary amine,
0% by weight to 20% by weight of core-shell particles,
0.3% by weight to 3% by weight of initiator, where the initiator and the tertiary amine are present in separate packs of the 2-pack system, and optionally further auxiliaries.

8. Road marking or ground coating according to Claim 7, **characterized in that** the reactive resin for production of the first, lower layer is halogen-free, and **in that** the reactive resin has the following ingredients:
3% by weight to 15% by weight of dimethacrylates, 30% by weight to 40% by weight of (meth)acrylates and optionally components copolymerizable with (meth)acrylates,
0% by weight to 20% by weight of urethane (meth)acrylates,
15% by weight to 25% by weight of poly(meth)acrylates,
0.2% to 0.8% by weight of tertiary amines,
0% by weight to 15% by weight of core-shell particles comprising polymethacrylates,
0.2% by weight to 3% by weight of dilauroyl peroxide and/or dibenzoyl peroxide as initiator and optionally further auxiliaries.

9. Road marking or ground coating according to at least one of Claims 1 to 8, **characterized in that** the first, lower layer includes, as well as the cured reactive resin, 0.15% by weight to 25% by weight of an inorganic pigment, preferably titanium dioxide, 0% by weight to 5% by weight of stabilizers and/or additives and 20% by weight to 80% by weight of mineral and/or polymeric fillers, based on 100% by weight of reactive resin.

10. Road marking or ground coating according to at least one of Claims 1 to 9, **characterized in that** the second, upper layer at 23°C has a tensile strain at break, measured to DIN 527, of less than 7.5%, and **in that** the (meth)acrylate resin for production of the second, upper layer, prior to application, has a viscosity at 23°C, measured to DIN 53015, of between 50 and 500 mPas.

11. Road marking or ground coating according to Claim 10, **characterized in that** the tensile strain at break is less than 2.5%, and **in that** the viscosity of the (meth)acrylate resin prior to application is between 50 and 250 mPas.

12. Road marking or ground coating according to at least one of Claims 1 to 11, **characterized in that** the second, upper layer has a thickness of not more than 500 µm.

13. Road marking or ground coating according to Claim 12, **characterized in that** the second, upper layer has a thickness of not more than 200 µm.

14. Method for laying a particularly heat-resistant and soil-repellent road marking, **characterized in that** this method includes the following method steps: a) mixing the components of a reactive resin according to any of Claims 6 to 9, b) applying the reactive resin to the road surface within the pot life of the reactive resin, c) optionally mixing the components according to either of Claims 4 and 5 for production of the second, upper layer, d) applying the reactive resin to the road surface within the pot life of the reactive resin and e) optionally sprinkling with glass beads, wherein the optional method step c) can be conducted before, in parallel with or after method steps a) or b), and method step e) before, in parallel with or after method step d).

15. Method according to Claim 14, **characterized in that** the application of the second, upper layer in method step d) follows performance of the non-optional method step c) and curing of the first, lower layer, with sprinkling of sprinkling agents into at least one of the two layers within the respective pot life.

16. Method according to Claim 15, **characterized in that** the application of the second, upper layer in method step d) which does not itself contain any initiator and is effected without performance of method step c) within the pot life of the first, lower layer, with optional sprinkling of sprinkling agents into one of the two layers within the pot life thereof.

17. Method according to Claim 14, **characterized in that** the laying is effected by machine, by means of a vehicle or device, with initial application of the first, lower layer from one or more outlet devices to the road surface or other outer surface according to method step b), followed within the pot life of the first layer by spray application of the second layer without initiator by means of one or more nozzles according to method step d) to the first, as yet uncured layer, and with optional laying of glass beads from one or more optional outlet devices onto one of the two layers according to method step e) within the pot life of the layer in question, wherein the three nozzles are not more than 2 m apart in movement direction and are operated simultaneously.

## Revendications

1. Marquage routier ou revêtement de sol à deux couches, luminescent, présentant une première couche inférieure, pour laquelle il s'agit d'une formulation durcie de résine réactive à deux composants à base de (méth)acrylate, qui contient avant le durcissement dans un ou dans les deux composants au moins 0,5% en poids de réticulant, au moins 10% en poids de monomères de (méth)acrylate, au moins 3% en poids de prépolymères et facultativement d'autres additifs, **caractérisé en ce qu'**il s'agit, pour la deuxième couche supérieure, d'un scellement durci de résine réactive qui est constitué par jusqu'à 50% en poids de luminophores, de pigments, de charges et/ou d'additifs et à raison d'au moins 50% en poids d'une résine durcie de (méth)acrylate, qui est constituée à son tour à raison d'au moins 50% en poids de motifs récurrents à base de (méth)acrylates et qui présente une température de transition vitreuse T_{g} d'au moins 60°C.

2. Marquage routier ou revêtement de sol selon la revendication 1, **caractérisé en ce que** la deuxième couche supérieure contient au moins 80% en poids de résine durcie de (méth)acrylate et au maximum 20% en poids de luminophores, de pigments, de charges et/ou d'additifs.

3. Marquage routier ou revêtement de sol selon la revendication 1 ou 2, **caractérisé en ce que** la résine durcie de (méth)acrylate de la deuxième couche supérieure présente une température de transition vitreuse T_{g} d'au moins 70°C.

4. Marquage routier ou revêtement de sol selon l'une quelconque des revendications 1 à 3, **caractérisé en ce que** le scellement de résine réactive contient, avant le durcissement en deuxième couche supérieure, 10 à 30% en poids d'un poly(méth)acrylate et/ou d'un polyester, 40 à 80% poids de monomères, pour lesquels il s'agit de (méth)acrylates et/ou partiellement de monomères copolymérisables avec des (méth)acrylates, 1 à 10% en poids de réticulant, 0 à 5% en poids d'une amine tertiaire aromatique, 0,1 à 25% en poids de luminophores, 0 à 25% en poids de pigments et/ou de charges, 1 à 10% en poids d'additifs, pour lesquels il s'agit de plastifiants, de paraffines, d'absorbants des UV, de stabilisants et/ou d'azurants optiques, et 0 à 5% en poids d'un ou de plusieurs initiateurs, qui ne sont rassemblés dans le mélange avec l'amine tertiaire que peu de temps avant l'application, les poly(méth)acrylates et/ou les polyesters présentant une température de transition vitreuse T_{g} d'au moins 70°C et le composant monomère étant constitué à raison de 50% en poids de monomères qui présentent, dans l'état polymérisé, une température de transition vitreuse d'au moins 60°C.

5. Marquage routier ou revêtement de sol selon la revendication 4, **caractérisé en ce que** le scellement de résine réactive contient, avant le durcissement en deuxième couche supérieure, 15 à 25% en poids d'un poly(méth)acrylate, 60 à 75% poids de (méth)acrylates présentant des radicaux C₁-C₄-alkyle, 2 à 8% en poids di(méth)acrylates et/ou de triméthacrylates, 0,4 à 4% en poids d'une amine tertiaire aromatique, 0,1 à 10% en poids de luminophores, 0 à 10% en poids de pigments et/ou de charges, 2 à 8% en poids d'additifs et 0 à 4% en poids de peroxyde de dilauroyle et/ou de peroxyde de dibenzoyle, les poly(méth)acrylates et les (méth)acrylates polymérisés présentant à chaque fois une température de transition vitreuse T_{g} d'au moins 70°C.

6. Marquage routier ou revêtement de sol selon l'une quelconque des revendications 1 à 5, **caractérisé en ce que** les deux composants de la résine réactive pour la réalisation de la première couche inférieure présentent ensemble les constituants suivants :
- 0,5% en poids à 30% en poids de réticulant,
- 10% en poids à 90,2% en poids de (méth)acrylates et facultativement de composants copolymérisables avec des (méth)acrylates,
- 4% en poids à 20% en poids d'uréthane(méth)acrylates,
- 3% en poids à 40% en poids de prépolymères,
- 0,1% en poids à 5% en poids d'au moins une amine tertiaire,
- 1% en poids à 25% en poids de particules à noyau-enveloppe,
- 0,2% en poids à 5% en poids d'au moins un initiateur, le ou les initiateurs et l'amine tertiaire se trouvant avant le mélange dans des composants séparés du système à deux composants, et le cas échéant d'autres adjuvants.

7. Marquage routier ou revêtement de sol selon la revendication 6, **caractérisé en ce que** les deux composants de la résine réactive pour la réalisation de la première couche inférieure présentent ensemble les constituants suivants :
- 2% en poids à 20% en poids de di(méth)acrylates, de tri(méth)acrylates ou de tétra(méth)acrylates,
- 30% en poids à 80% en poids de (méth)acrylates et facultativement de composants copolymérisables avec des (méth)acrylates,
- 0% en poids à 20% en poids d'uréthane(méth)acrylates,
- 15% en poids à 35% en poids de poly(méth)acrylates et/ou de polyesters,
- 0,4% en poids à 2,0% en poids d'au moins une amine tertiaire,
- 0% en poids à 20% en poids de particules à noyau-enveloppe,
- 0,3% en poids à 3% en poids d'initiateur, l'initiateur et l'amine tertiaire se trouvant dans des composants séparés du système à deux composants, et le cas échéant d'autres adjuvants.

8. Marquage routier ou revêtement de sol selon la revendication 7, **caractérisé en ce que** la résine réactive pour la réalisation de la première couche inférieure est exempte d'halogène et **en ce que** la résine réactive présente les constituants suivants :
- 3% en poids à 15% en poids de diméthacrylates,
- 30% en poids à 40% en poids de (méth)acrylates et facultativement de composants copolymérisables avec des (méth)acrylates,
- 0% en poids à 20% en poids d'uréthane(méth)acrylates,
- 15% en poids à 25% en poids de poly(méth)acrylates,
- 0,2 à 0,8% en poids d'amines tertiaires,
- 0% en poids à 15% en poids de particules à noyau-enveloppe contenant des polyméthacrylates,
- 0,2% en poids à 3% en poids de peroxyde de dilauroyle et/ou de peroxyde de dibenzoyle comme initiateur et facultativement d'autres adjuvants.

9. Marquage routier ou revêtement de sol selon au moins l'une quelconque des revendications 1 à 8, **caractérisé en ce que** la première couche inférieure présente, outre la résine réactive durcie, par rapport à 100% en poids de résine réactive, 0,15% en poids à 25% en poids d'un pigment inorganique, de préférence le dioxyde de titane, 0% en poids et 5% en poids de stabilisants et/ou d'additifs et 20% en poids à 80% en poids de charges minérales et/ou polymères.

10. Marquage routier ou revêtement de sol selon au moins l'une quelconque des revendications 1 à 9, **caractérisé en ce que** la deuxième couche supérieure présente, à 23°C, un allongement à la rupture, mesuré selon la norme DIN 527, inférieur à 7,5% et **en ce que** la résine de (méth)acrylate pour la préparation de la deuxième couche supérieure présente, avant l'application, une viscosité à 23°C, mesurée selon la norme DIN 53015, entre 50 et 500 mPa.s.

11. Marquage routier ou revêtement de sol selon la revendication 10, **caractérisé en ce que** l'allongement à la rupture est inférieur à 2,5% et **en ce que** la viscosité de la résine de (méth)acrylate avant l'application se situe entre 50 et 250 mPa.s.

12. Marquage routier ou revêtement de sol selon au moins l'une quelconque des revendications 1 à 11, **caractérisé en ce que** la deuxième couche supérieure présente une épaisseur d'au maximum 500 µm.

13. Marquage routier ou revêtement de sol selon la revendication 12, **caractérisé en ce que** la deuxième couche supérieure présente une épaisseur d'au maximum 200 µm.

14. Procédé pour la pose d'un marquage routier particulièrement résistant à la chaleur et repoussant les salissures, **caractérisé en ce que** ce procédé présente les étapes de procédé suivantes :
a) mélange des composants d'une résine réactive selon l'une quelconque des revendications 6 à 9,
b) application de la résine réactive sur la surface routière au cours de la durée de vie en pot pour la résine réactive,
c) facultativement mélange des composants selon l'une quelconque des revendications 4 ou 5 pour la préparation de la deuxième couche supérieure,
d) application de la résine réactive sur la surface routière au cours de la durée de vie en pot pour la résine réactive et
e) saupoudrage facultatif par des billes de verre, l'étape de procédé facultative c) pouvant être réalisée avant, parallèlement à ou après les étapes de procédé a) ou b) et l'étape de procédé e) pouvant être réalisée avant, parallèlement à ou après l'étape de procédé d).

15. Procédé selon la revendication 14, **caractérisé en ce que** l'application de la deuxième couche supérieure dans l'étape de procédé d) a lieu après la réalisation de l'étape de procédé c) non facultative et après le durcissement de la première couche inférieure, des agents de saupoudrage ultérieur étant répandus dans au moins l'une des deux couches au cours de la durée de vie en pot respective.

16. Procédé selon la revendication 15, **caractérisé en ce que** l'application de la deuxième couche supérieure dans l'étape de procédé d), qui ne contient pas d'initiateur elle-même et qui a lieu sans la réalisation de l'étape de procédé c), au cours de la durée de vie en pot de la première couche inférieure et des agents de saupoudrage ultérieur étant facultativement répandus dans l'une des deux couches au cours de leur durée de vie en pot.

17. Procédé selon la revendication 14, **caractérisé en ce que** la pose a lieu à la machine, au moyen d'un véhicule ou d'un dispositif, l'application ayant lieu d'abord par application de la première couche inférieure à partir d'un ou de plusieurs dispositifs de sortie sur la surface routière ou une autre surface extérieure selon l'étape de procédé b), ensuite, encore au cours de la durée de vie en pot de la première couche, la deuxième couche sans initiateur est pulvérisée sur la première couche non encore durcie selon l'étape de procédé d) au moyen d'une ou de plusieurs buses et l'application facultative de billes de verre est réalisée à partir d'un ou de plusieurs dispositifs de sortie facultatifs sur l'une des deux couches selon l'étape de procédé e), encore au cours de la durée de vie en pot de la couche concernée, et les trois buses étant écartées au maximum de 2 m les unes des autres dans la direction de déplacement et étant actionnées simultanément.
